# EUROPEAN PATENT SPECIFICATION

(11) **EP 1 720 324 B1**
(45) Date of publication and mention of the grant of the patent: **11.03.2009**
(21) Application number: 06252368.3
(22) Date of filing: 04.05.2006
(51) Int. Cl.: H04L 29/08

(54) **Data transmission in a telecommunications network**
Nachrichtenübertragung in einem Telekommunikationsnetz
Transmission de données dans une réseau de télécommunications

(30) Priority: 04.05.2005 GB 0509081
(43) Date of publication of application: 08.11.2006
(73) Proprietor: VODAFONE LIMITED, Newbury Berkshire RG14 2FN (GB)
(72) Inventor: Pudney, Christopher D., Newbury, Berkshire RG20 9EZ (GB)
(74) Representative: Keston, David Arthur

(56) References cited:
- WO-A-20/04071048
- WO-A-20/04091174
- GB-A- 2 398 204
- US-A1- 2002 138 545

## Description

The present invention relates to a method of operating a telecommunications network with which a plurality of users are registered and are each addressed by a publicly available user identifier. The present invention also relates to a system which implements this method and a device suitable for use in this method or system.

It is known, for example from WO-A-2004/071048, to exchange capability information between mobile devices. In a prior arrangement, information concerning the capabilities of a first user device is sent from the first user device to a second user device when a communication session is established between the two devices. This capability information, along with the telephone number of the first user device is then stored in the second user device so that the capability information can be recalled when a further communication session is established between the two devices. On establishing a further communication session, the second user device is able to recognise the capabilities of the first user device from its telephone number and it is not necessary to resend the capability information every time a communication session is established. This has the advantage that less traffic is sent over the telecommunications network, thereby improving network efficiency.

However, many users have multiple devices having a common telephone number but having different capabilities. In the prior arrangement, where the capability information is assigned to a telephone number (or equivalent user identifier), only the capabilities of one of the first user's devices is stored on the second user's device. Therefore when a communication session is initiated between a further device of the first user and the second user device, the second user device recalls the capability information for the first user device, which may be inappropriate for the further device of the first user. This results in unsuccessful attempts to communicate with the further user device in a manner which it does not support. As a result, network resources are wasted in the prior arrangement. Alternatively, every time the first user uses a new device, the capability information is sent to the second user device. This is also wasteful if network resources. It is an objective of the present invention to provide means for recognising the capabilities of a device, particularly for users of multiple devices.

The third generation partnership project (3GPP) has recently defined a new concept known as IMS (IP-based Multimedia Subsystem). The IMS is a set of core network servers sitting behind the GGSN (which will be briefly described below) in the packet switched domain. These servers are introduced in order to process signalling between end users. The aim of IMS is to allow bodies such as mobile telephone network operators to provide services to their users as efficiently and effectively as possible. For example, the IMS architecture is likely to support the following communication types, voice, video, instant messaging, "presence" (a user's availability for contact), location-based services, email and the web. Further communication types are likely to be added in the future.

The diverse collection of communications devices requires efficient session management due to the number of different applications and services that will be developed to support these communication types. The 3GPP have chosen Session Initiation Protocol (SIP) for managing these sessions.

The SIP protocol is a session-based protocol designed to establish IP based communication sessions between two or more end points or users. Once a SIP session has been established, communication between these end points or users can be carried out using a variety of different protocols (for example those designed for streaming audio and video). These protocols are defined in the SIP session initiation messages. Conventionally, capability information is sent using a SIP protocol.

With IMS, users are no longer restricted to a separate voice call or data session. Sessions can be established between mobile devices that allow a variety of communication types to be used and media to be exchanged. The sessions are dynamic in nature in that they can be adapted to meet the needs of the end users. For example, two users might start a session with an exchange of instant messages and then decide that they wish to change to a voice call, possibly with video. This is all possible within the IMS framework. If a user wishes to send a file to another user and the users already have a session established between each other (for example, a voice session) the session can be redefined to allow a data file exchange to take place. This session redefmition is transparent to the end user.

Currently, the packet switched domain operates with a fairly low bandwidth, and even with IMS, this limits data applications - such as high quality video conferencing. Even with the addition of IMS, the packet switched domain and the radio network are still limited as to what data can be reasonably carried, and in particular, what data can be carried efficiently.

GB-A-2410855 (VF ref: "IMS CS Bearer") discloses a mechanism that allows a network operator to use the IMS control plane (SIP signalling) to establish communication sessions between terminals that use the circuit switched user plane to carry data traffic instead of the packet switched user plane. This may be particularly advantageous for video conferencing, where the bandwidth requirement is high.

Following the conception of IMS, it is has become necessary to provide mobile devices that are able to support a diverse range of communication types. As mobile devices are developed to support the IMS communication types, devices will evolve at different rates and in different ways and therefore will have different capabilities. For example, a given model of mobile phone may be designed for high resolution video calls. If a communication session takes place between this mobile phone and a mobile phone of the same model, a video call can take place because both phones have that particular capability.

However, if the mobile phone attempts to set up a high resolution video call with a different model of mobile phone that does not have video capabilities, the data will be transmitted unsuccessfully. Attempts such as this to send data which cannot be successfully received increase traffic in the network and result in network inefficiency. Also, inefficiency arises if video data are sent at a higher resolution than can be reproduced by a receiving device.

The set of services that can successfully be supported between two devices depends on the capabilities of the devices. In addition to the examples given above, different devices will support different services. It is highly advantageous if the set of services that can be supported between two devices is known to the devices during a communication session. Therefore a need has arisen to know the capabilities of a device (i.e. which communication types it can support) at the start of a communications session. For example, capability information such as that required for setting up circuit switched voice telephony, circuit switched video telephony, simultaneous circuit switched and IMS capability, MMS (multimedia messaging service), IMS media streams, push to talk over cellular (PoC) and other IMS based capabilities or services comprise useful capability information that can be used to set up an appropriate communication session.

As explained, the types of communication session that can be successfully supported between two devices will depend on the specifications of the devices and their intrinsic capabilities. In addition, the current radio environment in the location of each device will also determine the services that can be supported by the users. Therefore further capability information that could be useful in setting up a communication session also includes information on the radio environment, such as the radio access network (RAN) and which services (for example those described above) would be supported by the radio environment.

According to a first aspect of the present invention, there is provided a method of operating a telecommunications network as defined in claim 1.

According to a second aspect of the present invention, there is provided a system as defined in claim 22.

According to a third aspect of the present invention, there is provided a mobile telecommunications device, as defined in claim 24.

A method and system of operating a telecommunications network with which a plurality of users are registered and are each addressed by a publicly available user identifier, and device for using that system or for implementing that method, embodying the invention, will now be described by way of example, with reference to the accompanying drawings, in which:
Figure 1 shows schematically a network in which the invention may be used.
Figure 2 shows schematically the elements of a communication system which allows communications between terminals managed by SIP.
Figure 3 shows the data communication between a terminal, a SIP network server and a further terminal for initiating a communication session.
Figure 4 shows the data communication between a terminal, a SIP network server and a further terminal for determining the capabilities of the further terminal.
Figure 5 shows schematically a prior arrangement for determining capability information in a SIP-based communication system.
Figure 6 shows schematically an arrangement according to the present invention for determining capability information in a SIP-based communication system.
Figure 7 shows the data communication between a terminal, a SIP network server and a further terminal for initiating a communication session in accordance with an embodiment of the present invention.
Figure 8 shows schematically a capability store in accordance with an embodiment of the present invention.

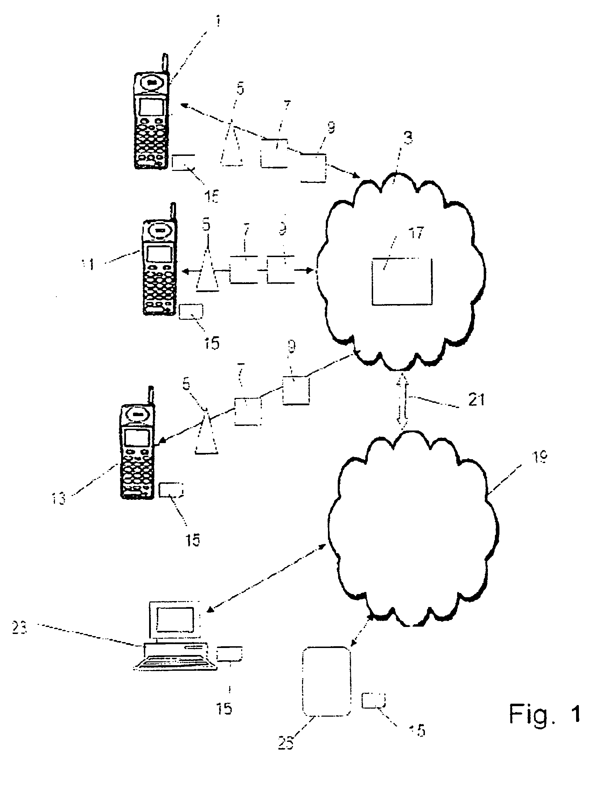

Figure 1 shows a cellular network. However, it should be appreciated that the invention is applicable to any type of network, although it is particularly applicable to a network where at least some of the devices communicate using mobile telecommunications/wireless data transmission. Mobile terminal 1 is registered with GSM/GPRS or UMTS (3G) mobile telecommunications network 3. The mobile terminal 1 may be a handheld mobile telephone, a personal digital assistant (PDA) or a laptop computer equipped with a datacard. The mobile terminal 1 communicates wirelessly with mobile telecommunications network 3 via the radio access network (RAN) of the mobile telecommunications network 3, comprising, in the case of a UMTS network, base station (Node B) 5, and radio network controller (RNC) 7. Communications between the mobile terminal 1 and the mobile telecommunications network 3 are routed from the radio access network via GPRS support nodes (SGSN) 9, which may be connected by a fixed (cable) link to the mobile telecommunications network 3.

In the conventional manner, a multiplicity of other mobile terminals are registered with the mobile telecommunications network 3. These mobile terminals include mobile terminals 11 and 13. The terminals 11 and 13 communicate with the mobile telecommunications network 3 in a similar manner to the terminal 1, that is via an appropriate Node B 5, RNC 7 and SGSN 9.

The mobile telecommunications network 3 includes a gateway GPRS support node (GGSN) 17 which enables IP-based communications with other networks, such as the Internet 19 via an appropriate link 21. A multiplicity of terminals are connected to the Internet (by fixed or wireless links), and a PC terminal 23 and a PDA terminal 25 are shown by way of example.

Each of the mobile terminals 1, 11 and 13 are provided with a respective subscriber identity module (SIM) 15. The SIM 15 is pre-programmed with a unique identification number, the "International Mobile Subscriber Identity" (IMSI) which is not visible on the card and is not known to the subscriber. The subscriber is issued with a publicly known number, that is, the subscriber's telephone number, by means of which calls to the subscriber are initiated by callers. This number is the MSISDN. During the manufacturing process of each SIM, authentication information is also stored thereon under the control of the mobile telecommunications network 3. The mobile telecommunications network 3 itself stores details of each of the SIMs issued under its control. In operation of the mobile telecommunications network 3, a terminal 1, 11, 13 is authenticated (for example, when the user activates the terminal in the network with a view to making or receiving calls) by the network sending a challenge to the terminal 1, 11, 13 incorporating a SIM 15, in response to which the SIM 15 calculates a reply (dependent on the predetermined information held on the SIM - typically an authentication algorithm and a unique key Ki) and transmits it back to the mobile telecommunications network 3. The SGSN 9 checks that the reply received matches the expected calculated reply. If they match, the SIM 15 and the associated mobile terminal are considered to be authenticated.

It should be understood that such an authentication process can be performed for any terminal provided with a SIM 15 under control of the mobile telecommunications network 3. In the embodiment the terminal communicates wirelessly with the mobile telecommunications network 3 via the network's radio access network, although this is not essential. For example, the terminal may communicate with the network via the fixed telephone network (PSTN), via a UMA "access point" and/or via the Internet. The PC 23 and the PDA 25 may also be provided with a SIM 15 under the control of the network.

The SIM 15 used by the terminal 1,11,13,23,25 may be a SIM of the type defined in the GSM or UMTS standards specifications, or may be a simulation of a SIM - that is, software or hardware that performs a function corresponding to that of the SIM. The SIM may be in accordance with the arrangement described in WO-A-2004 036513.

The SIM determines the user identifier (IMSI) by which a terminal is addressed by the network. This identifier has a corresponding publicly available extension (MSISDN) which comprises the telephone number of the terminal. Therefore the SIM determines the telephone number of the terminal in which it is located. As is known in the art, the SIM is a removable component that can be transferred between respective terminals. In addition the SIM is a component that can be replicated and placed in different respective terminals. Therefore for a user of multiple terminals, it is possible for each respective terminal to be addressed by the same user identifier (i.e. by the same telephone number).

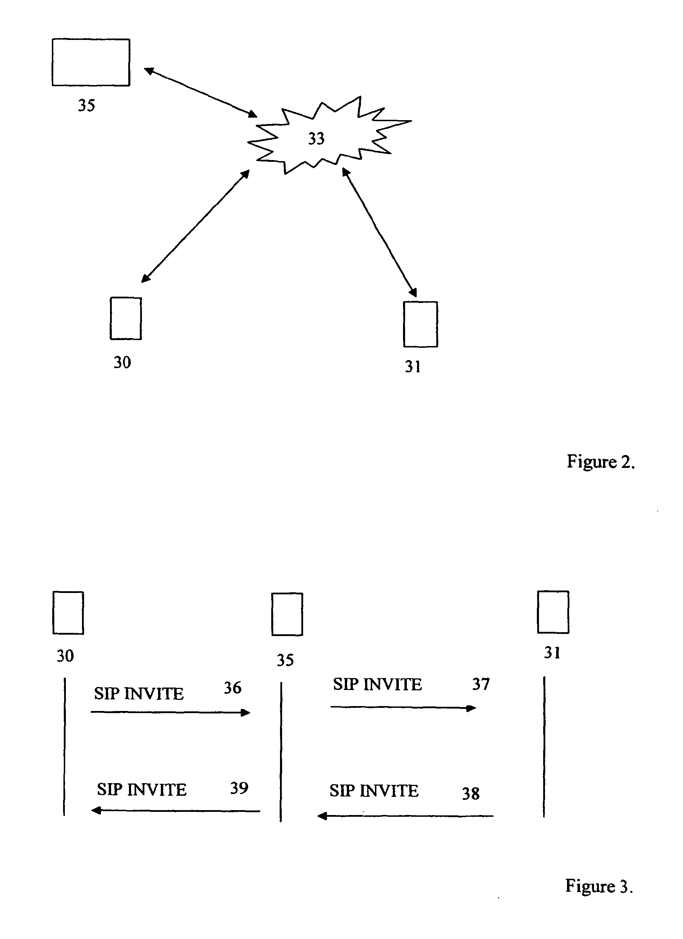

The communication system of Figure 2 allows communication between a first user terminal 30 - like that described in relation to Figure 1 - and a second user terminal 31 - like that described in relation to Figure 1. The first user terminal 30 and the second user terminal 31 subscribe to and communicate via a 3G mobile telephone network 33 - like that described in relation to Figure 1 - and are capable of IP based communications using SIP.

A SIP server 35 allows SIP based communication between first user terminal 30 and the second user terminal 31 via the 3G network 33.

In a known manner, the first user terminal 30 begins a communication session by the first user terminal 30 issuing an SIP INVITE REQUEST message addressed to the user name of the second user terminal 31. The user name is transmitted wirelessly by 3G network 33 to the SIP server 35. The SIP server 35 determines the current location of the user name associated with the first user terminal 30 and provides the current network address for the user name associated with the first user terminal 30. A communication session may then commence between the first user terminal 30 and the second user terminal 31 via the 3G network 33.

The setting up of a communication session between the first user terminal 30 and the second user terminal 33 in a known manner will now be described in more detail with reference to Figure 3.

The first user terminal 30 sends an INVITE REQUEST message 36 addressed to the URL known to it for the second user terminal 31. The INVITE REQUEST message 36 is passed to the SIP server 35. The SIP server 35 determines the address of the second user terminal 31 corresponding to the URL provided by the first user terminal 30 and sends an INVITE REQUEST message 37 to the second user terminal 31. In response the second user terminal 31 sends an INVITE RESPONSE message 38 to the SIP server 35. This INVITE RESPONSE message, 39, is forwarded by the SIP server 35 to the first user terminal 30. After receiving the INVITE RESPONSE message 39 from the SIP server 35, a call session 40 may be established between the first user terminal 30 and the second user terminal 31.

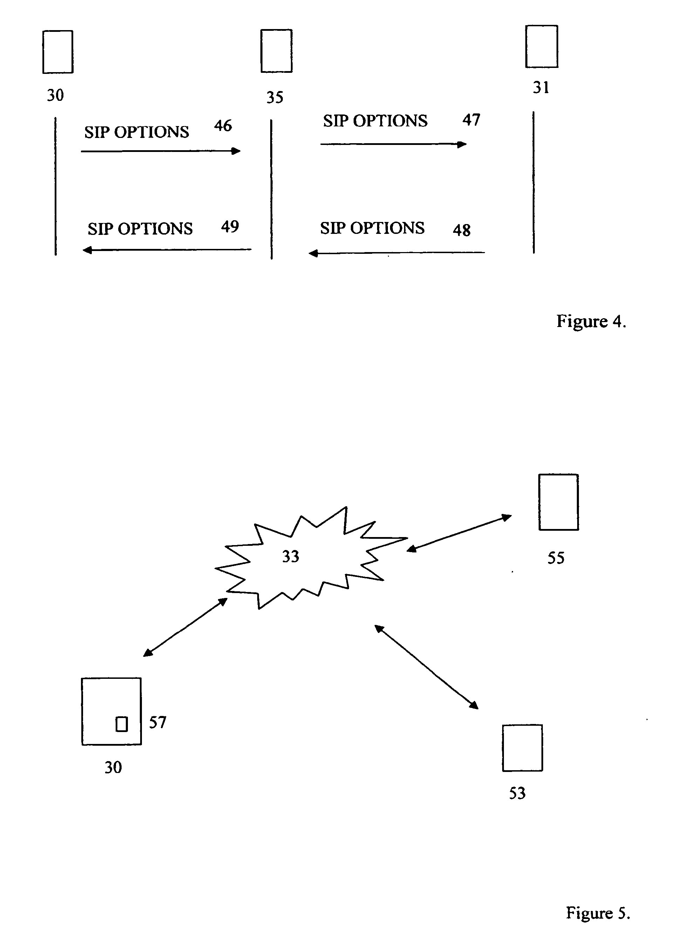

In order to determine the capabilities of a remote device in a known manner, as briefly mentioned above, the SIP protocol OPTIONS is conventionally used. This works in a similar manner to the SIP INVITE protocol, and is described here with reference to Figure 4. In order to determine the capabilities of the second user terminal 31, the first user terminal 30 sends an OPTIONS REQUEST message 46 addressed to the URL known to it for the second user terminal 31. The OPTIONS REQUEST message requests details of the capabilities of the second user terminal 31. The OPTIONS REQUEST message 46 is passed to the SIP server 35. The SIP server 35 determines the address of the second user terminal 31 corresponding to the URL provided by the first user terminal 30 and sends an OPTIONS REQUEST message 47 to the second user terminal 31. The second user terminal 31 compiles an OPTIONS RESPONSE message 48, indicating the capabilities of the second user terminal 31. The second user terminal 31 sends the OPTIONS RESPONSE message 48 to the SIP server 35. This OPTIONS RESPONSE message, 49, is forwarded by the SIP server 35 to the first user device 30. After receiving the OPTIONS RESPONSE message 49 from the SIP server 35, the capabilities of the second user terminal may be stored in the first user terminal, together with the telephone number of the first terminal. Such an arrangement works acceptably when a user has only one terminal.

Figure 5 describes a situation in which the second user has two terminals: a mobile telephone 53 which supports voice only; and a PDA 55 which supports voice and multimedia data. Both these terminals are addressed by the same telephone number; typically, the user will have a single SIM for use in the two terminal and will transfer the SIM between the terminals to use them. The first user device 30 obtains information concerning the capabilities of the PDA 55 using the SIP OPTIONS procedure described above. This capability information is then stored with the telephone number in the memory 57 of first user terminal 30. When a further communication session between the first user terminal and the PDA 55 is established, the first user terminal 30 recognises the capability of the PDA 55 from its telephone number. Therefore the SIP OPTIONS procedure is not initiated.

If a communication session is subsequently established between the first user terminal 30 and the mobile phone 53 with the same telephone number as the PDA 55, the first user terminal 30 looks up the capabilities assigned to the telephone number, and carries out a communication session based on the capabilities of the PDA 55. For example, the communication session may involve the sending of multimedia images, which are not supported by the mobile phone 53. A disadvantage of the conventional system therefore is that for a user of multiple devices, the capabilities of each respective device may not be correctly recognised.

Thus far what has been described is how capability information is conventionally exchanged and stored.

In the embodiment of the invention now to be described, capability information is sent from a second user terminal and stored at a first user terminal along with an element which is indicative of the identity of the terminal sending the information, rather than just the identity of the user/SIM. In this embodiment, the information is exchanged using SIP protocols. However, it is understood that other signalling protocols may be used for the data exchange. In particular, an element which is indicative of the identity of the terminal may be sent in the circuit switched Call Setup signalling, for example by encoding it within the User-User Signalling information element contained within the 3GPP TS 24.008 SETUP and CONNECT messages and other messages of the Call control protocol.

In accordance with a primary aspect of the present embodiment, the user of the terminal 30 is able to identify the capabilities of the mobile phone 53 as being distinguished from the PDA 55. It is understood that the capabilities can be exchanged by a two-way process, so that each user discovers the capabilities of the other user device. However, in the embodiment described here, only a one way process is described for simplicity of understanding.

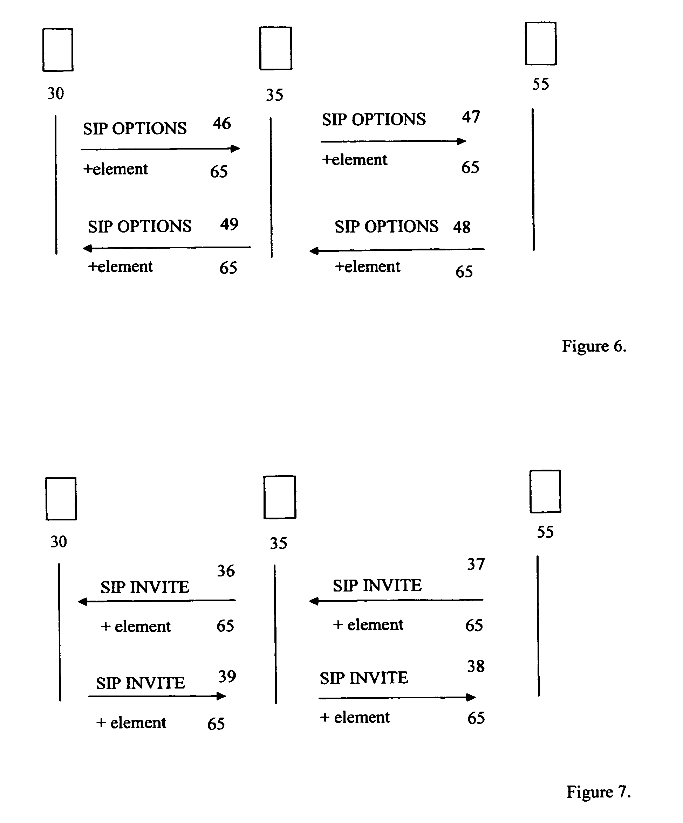

Figure 6 shows schematically the modifications made to the terminal 30 and the PDA 55, and the data exchanges occurring between those devices in the embodiment of the invention.

In the known manner, the first user terminal 30 initiates the SIP OPTIONS protocol in order to determine the capabilities of the PDA 55. The capability determination (capability discovery process) may be performed as a distinct data exchange operation between the terminals, or may occur when a first communication session is initiated between the two terminal (which have not communicated before). As described before, OPTIONS REQUEST messages 46,47 are sent from the first user terminal 30 to the PDA 55 via the SIP server 35. The OPTIONS REQUEST message requests details of the capabilities of the PDA 55. In response, the PDA 55 compiles and sends an OPTIONS RESPONSE message 48, indicating the capabilities of the the PDA 55, together with an element 65 (identifying the PDA 55) to the SIP server 35. The message 48 also may include the telephone number of the user (or some other user identifier). This OPTIONS RESPONSE message 49, together with the element 65 is forwarded by the SIP server 35 to the first user device 30.

The element 65 contains the necessary information to indicate the identity of the PDA 55. In the embodiment shown, the element 65 is a 1 byte field and is generated in a random manner from the terminal's IMEI (international mobile equipment identity). However, the element 65 may also be generated by other means, for example from the last random digits of the IMSI (international mobile subscriber identity). It is understood that the element may be smaller or larger in size than a 1 byte field.

Instead of being generated at random from the IMSI, in an alternative embodiment, the element may be selected by the user.

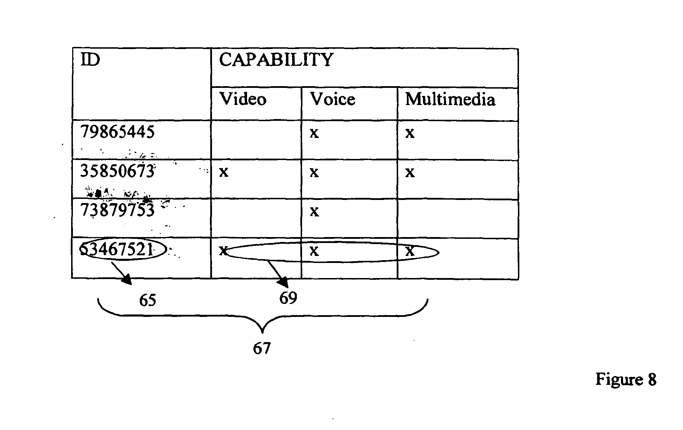

After receiving the OPTIONS RESPONSE message 49 together with the 1 byte field, the first user terminal 30 extracts the capability information of the PDA 55 from the OPTIONS RESPONSE message 49, and stores this information together with the 1 byte field in a capability store 67. The user's telephone number (or other identifier) may also be stored in the store 67. In the present embodiment, the capability store 67 comprises a look up table, as illustrated by figure 8. The look-up table allows the first user terminal 30 to determine the capabilities of a remote terminal from its identifier.

For example, capabilities listed in the look up table may include data transmission information - i.e. information concerning the type of communication session (e.g. IMS, circuit switched, simultaneous IMS and circuit switched) the PDA 55 would be able to support. In addition, the look up table may include device specific information - for example the display resolution or whether circuit switched voice calls, circuit switched video calls, IMS media streams, push to talk over cellular (PoC), multimedia messaging (MMS), etc would be supported. The look up table may also include radio environment information - i.e. information about the local radio environment.

When a subsequent communication session is established between the first user terminal 30 and the PDA 55, the PDA 55 sends the element 65 to the first user terminal as part of the signalling that is used to set up the call.

The subsequent communication session may be held using a circuit-switched or a packet-switched (IMS) connection. If the subsequent communication session is in the circuit-switched domain, the element 65 is sent as part of the call set up procedure, as is known in the art. If the subsequent communication session is in the packet-switched domain, the element is sent in addition to the SIP INVITE messages, as described earlier. This will now be described in detail with reference to figure 7.

The PDA 55 sends an INVITE REQUEST message 36, together with the element 65, addressed to the URL known to it for the first user terminal 30. The INVITE REQUEST message 36 together with the element 65 is passed to the SIP server 35. The SIP server 35 determines the address of the first user terminal 30 corresponding to the URL provided by the PDA 55 and sends an INVITE REQUEST message 37 together with the element 65 to the first user terminal 30.

When the element 65 is received by the first user terminal 30 during the subsequent communication session, the first user terminal searches the capability store 67 for the entry 69 containing the element 65. On finding the entry 9, the first user terminal 30 extracts the capability information from the capability store entry 69 to determine the capability information for the PDA 55. Accordingly, the first user terminal 30 may use the capability information in the known way to regulate the communication that it provides to the PDA 55 so that any communications make efficient use of the bandwidth available.

Subsequent to what has been described in the previous paragraph, the user of PDA 55 and mobile device 53 establishes a communication session with the first user terminal 30, using the mobile device 53. In this embodiment, the PDA 55 and mobile device 53 share a SIM. In the signalling procedures that are used to set up the communications session, the device identification element is sent from the mobile device 53 to the first user terminal 30. On receipt of the device identification element, the first user terminal 30 searches the capability store 67 for an entry containing the element sent from the mobile device 53. If this is not the first communication that has taken place between the first user terminal 30 and the mobile device 53, the device identification element sent from the mobile device 53 will be found in the capability store 67of the first user terminal 30. This capability information can then be retrieved and used to optimise the communication session between the first user terminal 30 and the mobile device 53.

However, if this is the first communication session that has taken place between the first user terminal 30 and the mobile device 53, the device identification element sent from the mobile device 53 will not be found in the capability store 67 of the first user terminal 30. This prompts the first user terminal 30 to initiate the SIP OPTIONS protocol to determine the capabilities of the mobile device 53.

By using the device identification in communications between terminals and to reference device capabilities in device capability stores, the communication between respective devices can be optimised, even if the user of one of the devices also has a further device(s) that share the same SIM (and/or telephone number).

Of course, it is advantageous that both devices participating in a communication session know the capabilities of the other device. Therefore, advantageously, the capability discovery procedure described above will be performed by both devices, and both devices will have a capability store.

Advantageously, the capability discovery process may also be used in the situation where calls are forwarded from one of a user's devices to another of the user's devices. When calls are made from a calling device to a device which has activated call forwarding, the calling party contacts the SIP server in the normal way to initiate the call, and the SIP server redirects the call to the forwarded device. The usual signalling to set up a call is then performed.

In this situation, both devices would be addressed by the same telephone number. Therefore in the prior art arrangement described with reference to Figure 3, there would be no way of distinguishing between the capability information for the device that forwards the calls and the capability information of the device that receives the forwarded calls. However, in the embodiment described herein, the element 65 identifying the device to which the calls are forwarded will be provided to the calling device as part of the signalling to set up the call. The calling device is therefore able to discover the capabilities of the device to which calls are forwarded by consulting the calling device's capability store 67 (if the capability discovery process has already been performed).

The information in the capability store may cause user plane data in an IMS communication session to be sent in the circuit switched domain, if it is determined from the capability information that this would be appropriate. For example, this might be appropriate for a video call where only low bandwidth is available in the circuit switched domain.

A device, when determining the optimum way to communicate in a communication session between two devices, may take into account the current radio environment to determine the optimum way to communicate, in addition to basing the decision on the capability information. For example, if a device is in an area with only poor RAN coverage, and the capability information indicates that the device can communicate in the circuit switched domain and the packet switched domain, a decision may be made to send user plane data in the circuit switched domain to optimise communication quality.

The group of devices which store capability information about one another may be of any size. Such a group could include all the devices owned by a company or by a group of friends, for example.

To accommodate for changes in the capabilities of devices, (for example due to changes in the radio environment etc.), the capability store can be updated so that the existing capability information is updated with new capability information. The capability store can be updated in a periodic manner (i.e. by initiating the SIP OPTIONS protocol at a given period of time after the last update). Alternatively, in the event that a change in capability of a device has taken place, that device could update the capability store of any devices it communicates with at the start of any subsequent communication session.

## Claims

1. A method of operating a telecommunications network (33) with which a plurality of users are registered and are each addressed by a publicly available user identifier, each user having one or more telecommunications devices (30,53,55), the method including sending to a second user's device (30) a message containing information about the capabilities of a first user's devices (55), wherein the first user is a user of a plurality of devices (53, 55), each device of the first user being addressed by the same said publicly available user identifier; **characterised by** storing on the second user's device (30) the capability information in a capability store (67) together with an element (65), different from the publicly available user identifier of the first user, indicative of the identity of the first user's device (55) and distinguishable from an element indicative of another one of the first user's devices; and, when establishing a communication session between the first user's device (55) and the second user's device (30), sending to the second user's device (30) the element indicative of the identity of the first user's device (55); the second user's device (30), in response to the received element indicative of the identity of the first user's device (55) retrieving the capability information of the first user's device (55) from the capability store (67), in response to which, the second user's device becomes aware of the capabilities of the first user's device (55).

2. The method of claim 1, wherein each device is registered with the same said network.

3. The method of claim 1, wherein at least one of the devices registered with a network different from said network.

4. The method of any preceding claim wherein each said user identifier is determined by a respective authentication storage means (15) associated with that user.

5. The method of claim 4, wherein the authentication storage means (15) is transferable between the respective user devices of each user.

6. The method of claim 4 or 5, wherein the authentication storage means (15) determines the telephone numbers of the devices.

7. The method of claim 4, 5 or 6 wherein the authentication storage means (15) determines the MSISDN's of the devices.

8. The method of claim 4, 5, 6 or 7 wherein the authentication storage means (15) comprises a GSM or UMTS subscriber identity module.

9. The method of any one of the preceding claims, wherein at least one of the user's devices is configured to forward calls to another of that user's devices.

10. The method of any preceding claim wherein the element is generated in a random manner.

11. The method of any preceding claim wherein the element is generated from an identifying field, specific to the device.

12. The method of any preceding claim wherein the element comprises the last random digits of the IMEI or IMSI of the device.

13. The method of any preceding claim wherein the element is a 1 byte field.

14. The method of any preceding claim wherein the or one of the networks is a UMTS network.

15. The method of any preceding claim wherein the message is sent as part of an information exchange between the first and second terminals.

16. The method of any preceding claim wherein the message is sent as part of a SIP signalling procedure.

17. The method of any preceding claim wherein the or one of the networks is a GSM network.

18. The method of any preceding claim wherein the communication session uses the circuit switched domain.

19. The method of any one of claims 1-18 wherein the communication uses the packet switched domain.

20. The method of any preceding claim wherein the capability store comprises a look-up table.

21. The method of any preceding claim wherein the capability store is updated to reflect changes in the capability of the users' devices.

22. A system comprising a telecommunications network (33) and a plurality of telecommunications devices (30, 53, 55), a plurality of users registered with said network (33) and each addressed by a publicly available user identifier (MSISDN), each user having one or more telecommunications devices (30,53,55), the system further comprising means for sending to a second user's device (30) a message containing information about the capabilities of a first user's device (55), wherein the first user is a user of a plurality of devices (53, 55), each device of the first user being addressed by the same said publicly available user identifier; **characterised by** means for providing an element (65), different from the publicly available user identifier of the first user, indicative of the identity of the first user's device and distinguishable from an element indicative of another one of the first user's devices; means for storing on the second user's device (30) the capability information in a capability store (67) together with the element (65); means for sending to the second user's device (30) the element indicative of the identity of the first user's device (55) when establishing a communication session between the first user's device (55) and the second user's device (30); means associated with the second user's device (30), responsive to the received element indicative of the identity of the first user's device (55), being operable to retrieve the capability information of the first user's device (55) from the capability store (67) and, in response to which, the second user's device (30) becomes aware of the capabilities of the first user's device (55).

23. The system of claim 22, operable to perform all the steps of the method of any one of claims 1 to 21.

24. A mobile telecommunications device (30) of a user, registerable with a telecommunications network (33) with which a plurality of users are registered and each are addressed by a publicly available user identifier (MSISDN), the mobile telecommunications device (30) comprising means for receiving from the network (33) a message containing information about the capabilities of another user's device (55) wherin said other user is a user of a plurality of devices, each device of said other user being addressed by the same publicly available user identifier; **characterised by** means for storing the capability information in a capability store (67) together with an element (65), different from the publicly available user identifier of said other user, indicative of the identity of the said other user's device (55) and distinguishable from an element indicative of another one of the other user's devices (53), means for receiving the element indicative of the identity of the other user's device (55) when establishing a communication session with said other user's device (55); and means responsive to the received element indicative of the identity of the other user's device (55) being operable to retrieve the capability information from the capability store (67), in response to which, the mobile telecommunications device (30) becomes aware of the capabilities of the other user's device (55).

25. The device of claim 24, operable to perform all the method steps performed by the second user's device in the method of any one of claims 1 to 21.

## Patentansprüche

1. Verfahren zum Betreiben eines Telekommunikationsnetzes (33), bei dem mehrere Benutzer registriert sind und jeweils mit einer öffentlich verfügbaren Benutzerkennung adressiert werden, wobei jeder Benutzer ein oder mehrere Telekommunikationsgeräte (30, 53, 55) hat, wobei das Verfahren das Senden einer Nachricht zu einem zweiten Benutzergerät (30) beinhaltet, die Informationen über die Fähigkeiten eines ersten Benutzergerätes (55) enthält, wobei der erste Benutzer ein Benutzer einer Mehrzahl von Geräten (53, 55) ist, wobei jedes Gerät des ersten Benutzers mit derselben genannten öffentlich verfügbaren Benutzerkennung adressiert wird; **gekennzeichnet durch** Speichern der Fähigkeitsinformationen auf dem zweiten Benutzergerät (30) in einem Fähigkeitsspeicher (67) zusammen mit einem Element (65), das sich von der öffentlich verfügbaren Benutzerkennung des ersten Benutzers unterscheidet und das die Identität des ersten Benutzergerätes (55) anzeigt und von einem Element unterschieden werden kann, das ein anderes der Geräte des ersten Benutzers anzeigt; und beim Herstellen einer Kommunikationssession zwischen dem ersten Benutzergerät (55) und dem zweiten Benutzergerät (30) Senden des die Identität des ersten Benutzergerätes (55) anzeigenden Elementes zu dem zweiten Benutzergerät (30); wobei das zweite Benutzergerät (30) als Reaktion auf das empfangene, die Identität des ersten Benutzergerätes (55) anzeigende Element die Fähigkeitsinformationen des ersten Benutzergerätes (55) aus dem Fähigkeitsspeicher (67) abruft, worauf das zweite Benutzergerät Kenntnis über die Fähigkeiten des ersten Benutzergerätes (55) erhält.

2. Verfahren nach Anspruch 1, wobei alle Geräte bei demselben genannten Netzwerk registriert sind.

3. Verfahren nach Anspruch 1, wobei wenigstens eines der Geräte bei einem Netzwerk registriert ist, das sich von dem genannten Netzwerk unterscheidet.

4. Verfahren nach einem der vorherigen Ansprüche, wobei jede genannte Benutzerkennung anhand eines jeweiligen Authentifikationsspeichermittels (15) ermittelt wird, das mit diesem Benutzer assoziiert ist.

5. Verfahren nach Anspruch 4, wobei das Authentifikationsspeichermittel (15) zwischen den jeweiligen Benutzergeräten jedes Benutzers übertragbar ist.

6. Verfahren nach Anspruch 4 oder 5, wobei das Authentifikationsspeichermittel (15) die Telefonnummern der Geräte ermittelt.

7. Verfahren nach Anspruch 4, 5 oder 6, wobei das Authentifikationsspeichermittel (15) die MSISDNs der Geräte ermittelt.

8. Verfahren nach Anspruch 4, 5, 6 oder 7, wobei das Authentifikationsspeichermittel (15) ein GSM- oder UMTS-Subscriber-Identitätsmodul umfasst.

9. Verfahren nach einem der vorherigen Ansprüche, wobei wenigstens eines der Benutzergeräte so konfiguriert ist, dass es Anrufe zu einem anderen der Geräte dieses Benutzers weiterleitet.

10. Verfahren nach einem der vorherigen Ansprüche, wobei das Element auf zufällige Weise erzeugt wird.

11. Verfahren nach einem der vorherigen Ansprüche, wobei das Element von einem für das Gerät spezifischen Identifikationsfeld erzeugt wird.

12. Verfahren nach einem der vorherigen Ansprüche, wobei das Element die letzten zufälligen Stellen der IMEI oder IMSI des Gerätes umfasst.

13. Verfahren nach einem der vorherigen Ansprüche, wobei das Element ein 1-Byte-Feld ist.

14. Verfahren nach einem der vorherigen Ansprüche, wobei das oder eines der Netzwerk(e) ein UMTS-Netzwerk ist.

15. Verfahren nach einem der vorherigen Ansprüche, wobei die Nachricht als Teil eines Informationsaustauschs zwischen dem ersten und dem zweiten Terminal gesendet wird.

16. Verfahren nach einem der vorherigen Ansprüche, wobei die Nachricht als Teil einer SIP-Signalisierungsprozedur gesendet wird.

17. Verfahren nach einem der vorherigen Ansprüche, wobei das oder eines der Netzwerk(e) ein GSM-Netzwerk ist.

18. Verfahren nach einem der vorherigen Ansprüche, wobei die Kommunikationssession die leitungsgeschaltete Domäne benutzt.

19. Verfahren nach einem der Ansprüche 1-18, wobei die Kommunikation die paketgeschaltete Domäne benutzt.

20. Verfahren nach einem der vorherigen Ansprüche, wobei der Fähigkeitsspeicher eine Lookup-Tabelle umfasst.

21. Verfahren nach einem der vorherigen Ansprüche, wobei der Fähigkeitsspeicher so aktualisiert wird, dass er Änderungen der Fähigkeiten der Geräte des Benutzers reflektiert.

22. System, das Folgendes umfasst: ein Telekommunikationsnetzwerk (33) und mehrere Telekommunikationsgeräte (30, 53, 55), mehrere Benutzer, die bei dem genannten Netzwerk (33) registriert sind und jeweils durch eine öffentlich verfügbare Benutzerkennung (MSISDN) adressiert werden, wobei jeder Benutzer ein oder mehrere Telekommunikationsgeräte (30, 53, 55) hat, wobei das System ferner Mittel zum Senden einer Nachricht zu einem zweiten Benutzergerät (30) umfasst, die Informationen über die Fähigkeiten eines ersten Benutzergerätes (55) enthält, wobei der erste Benutzer ein Benutzer einer Mehrzahl von Geräten (53, 55) ist, wobei jedes Gerät des ersten Benutzers mit derselben genannten öffentlich verfügbaren Benutzerkennung adressiert wird; **dadurch gekennzeichnet, dass** es Folgendes umfasst: Mittel zum Bereitstellen eines Elementes (65), das sich von der öffentlich verfügbaren Benutzerkennung des ersten Benutzers unterscheidet und das die Identität des ersten Benutzergerätes anzeigt und von einem Element unterschieden werden kann, das ein anderes der ersten Benutzergeräte anzeigt; Mittel zum Speichern der Fähigkeitsinformationen über das zweite Benutzergerät (30) in einem Fähigkeitsspeicher (67) zusammen mit dem Element (65); Mittel zum Senden des die Identität des ersten Benutzergerätes (55) anzeigenden Elementes zu dem zweiten Benutzergerät (30) beim Herstellen einer Kommunikationssession zwischen dem ersten Benutzergerät (55) und dem zweiten Benutzergerät (30); Mittel in Verbindung mit dem zweiten Benutzergerät (30), das auf das empfangene, die Identität des ersten Benutzergerätes (55) anzeigenden Elementes anspricht und die Aufgabe hat, die Fähigkeitsinformationen des ersten Benutzergerätes (55) aus dem Fähigkeitsspeicher (67) abzurufen, worauf das zweite Benutzergerät Kenntnis über die Fähigkeiten des ersten Benutzergerätes (55) erhält.

23. System nach Anspruch 22 mit der Aufgabe, alle Schritte des Verfahrens nach einem der Ansprüche 1 bis 21 auszuführen.

24. Mobiles Telekommunikationsgerät (30) eines Benutzers, das bei einem Telekommunikationsnetzwerk (33) registriert werden kann, bei dem mehrere Benutzer registriert sind, die jeweils mit einer öffentlich verfügbaren Benutzerkennung (MSISDN) adressiert werden können, wobei das mobile Telekommunikationsgerät (30) Mittel zum Empfangen einer Nachricht von dem Netzwerk (33) umfasst, die Informationen über die Fähigkeiten eines anderen Benutzergerätes (55) enthält; wobei der genannte andere Benutzer ein Benutzer von mehreren Geräten ist, wobei jedes Gerät des genannten anderen Benutzers mit derselben öffentlich verfügbaren Benutzerkennung adressiert werden kann; **gekennzeichnet durch** Mittel zum Speichern der Fähigkeitsinformationen in einem Fähigkeitsspeicher (67) zusammen mit einem Element (65), das sich von der öffentlich verfügbaren Benutzerkennung des genannten anderen Benutzers unterscheidet, das die Identität des genannten anderen Benutzergerätes (55) anzeigt und von einem Element unterschieden werden kann, das ein anderes der anderen Benutzergeräte (53) anzeigt; Mittel zum Empfangen des Elementes, das die Identität des anderen Benutzergerätes (55) anzeigt, wenn eine Kommunikationssession mit dem genannten anderen Benutzergerät (55) hergestellt wird; und Mittel, die auf das empfangene, die Identität des anderen Benutzergerätes (55) anzeigende Element reagieren, mit der Aufgabe, die Fähigkeitsinformationen aus dem Fähigkeitsspeicher (67) abzurufen, worauf das mobile Telekommunikationsgerät (30) Kenntnis über die Fähigkeiten des anderen Benutzergerätes (55) erhält.

25. Vorrichtung nach Anspruch 24 mit der Aufgabe, alle Verfahrensschritte auszuführen, die von dem zweiten Benutzergerät in dem Verfahren nach einem der Ansprüche 1 bis 21 ausgeführt werden.

## Revendications

1. Procédé d'exploitation d'un réseau de télécommunications (33) auprès duquel une pluralité d'utilisateurs sont enregistrés et un identifiant d'utilisateur disponible au public permet d'accéder à chaque utilisateur, chaque utilisateur possédant un ou plusieurs dispositifs de télécommunications (30, 53, 55), le procédé englobant l'opération consistant à envoyer à un dispositif (30) d'un deuxième utilisateur un message contenant des informations au sujet des capacités d'un dispositif (55) du premier utilisateur, cas dans lequel le premier utilisateur est un utilisateur d'une pluralité de dispositifs (53, 55), chaque dispositif du premier utilisateur étant sollicité par ledit même identifiant d'utilisateur disponible au public ; **caractérisé par** l'opération consistant à stocker sur le dispositif (30) du deuxième utilisateur les informations concernant la capacité dans une mémoire de capacités (67) en conjonction avec un élément (65), lequel est différent de l'identifiant d'utilisateur disponible au public relatif au premier utilisateur, qui indique l'identité du dispositif (55) du premier utilisateur et qu'il est possible de distinguer d'un élément qui indique un autre dispositif parmi les dispositifs du premier utilisateur ; et lors de l'établissement d'une session de communication entre le dispositif (55) du premier utilisateur et le dispositif (30) du deuxième utilisateur, l'opération consistant à envoyer au dispositif (30) du deuxième utilisateur l'élément qui indique l'identité du dispositif (55) du premier utilisateur ; le dispositif (30) du deuxième utilisateur, en réaction à l'élément reçu indiquant l'identité du dispositif (55) du premier utilisateur, effectuant la récupération des informations de capacité relatives au dispositif (55) du premier utilisateur à partir de la mémoire de capacités (67), en réaction de quoi le dispositif du deuxième utilisateur se rend compte des capacités du dispositif (55) du premier utilisateur.

2. Procédé selon la revendication 1, chaque dispositif étant enregistré auprès dudit même réseau.

3. Procédé selon la revendication 1, l'un au moins des dispositifs étant enregistré auprès d'un réseau qui est différent dudit réseau.

4. Procédé selon l'une quelconque des revendications précédentes, chacun desdits identifiants d'utilisateur étant déterminé par un moyen de stockage d'authentification (15) respectif associé à l'utilisateur en question.

5. Procédé selon la revendication 4, le moyen de stockage d'authentification (15) étant transférable entre les dispositifs d'utilisateur respectifs de chaque utilisateur.

6. Procédé selon la revendication 4 ou 5, le moyen de stockage d'authentification (15) déterminant les numéros de téléphone des dispositifs.

7. Procédé selon la revendication 4, 5 ou 6, le moyen de stockage d'authentification (15) déterminant les MSISDN des dispositifs.

8. Procédé selon la revendication 4, 5, 6 ou 7, le moyen de stockage d'authentification (15) comprenant un module d'identité d'abonné GSM ou UMTS.

9. Procédé selon l'une quelconque des revendications précédentes, l'un au moins des dispositifs de l'utilisateur étant configuré pour réacheminer les appels vers un autre dispositif parmi les dispositifs de cet utilisateur.

10. Procédé selon l'une quelconque des revendications précédentes, l'élément étant généré de manière aléatoire.

11. Procédé selon l'une quelconque des revendications précédentes, l'élément étant généré à partir d'un champ d'identification lequel est spécifique au dispositif.

12. Procédé selon l'une quelconque des revendications précédentes, l'élément comprenant les derniers chiffres aléatoires de l'IMEI ou de l'IMSI du dispositif.

13. Procédé selon l'une quelconque des revendications précédentes, l'élément étant un champ à 1 octet.

14. Procédé selon l'une quelconque des revendications précédentes, ledit réseau ou l'un des réseaux étant un réseau UMTS.

15. Procédé selon l'une quelconque des revendications précédentes, le message étant envoyé comme faisant partie d'un échange d'informations entre le premier terminal et le deuxième terminal.

16. Procédé selon l'une quelconque des revendications précédentes, le message étant envoyé comme faisant partie d'une procédure de signalisation SIP.

17. Procédé selon l'une quelconque des revendications précédentes, ledit réseau ou l'un des réseaux étant un réseau GSM.

18. Procédé selon l'une quelconque des revendications précédentes, la session de communication faisant intervenir le domaine à commutation de circuits.

19. Procédé selon l'une quelconque des revendications 1 à 18, la communication faisant intervenir le domaine à commutation de paquets.

20. Procédé selon l'une quelconque des revendications précédentes, la mémoire de capacités comportant une table à consulter.

21. Procédé selon l'une quelconque des revendications précédentes, la mémoire de capacités étant mise à jour afin de refléter les changements en ce qui concerne la capacité des dispositifs des utilisateurs.

22. Système comprenant un réseau de télécommunications (33) et une pluralité de dispositifs de télécommunications (30, 53, 55), une pluralité d'utilisateurs enregistrés auprès dudit réseau (33) et chacun étant sollicité par un identifiant d'utilisateur disponible au public (MSISDN), chaque utilisateur possédant un ou plusieurs dispositifs de télécommunications (30, 53, 55), le système comprenant en outre des moyens pour envoyer à un dispositif (30) d'un deuxième utilisateur un message contenant des informations au sujet des capacités d'un dispositif (55) du premier utilisateur, cas dans lequel le premier utilisateur est un utilisateur d'une pluralité de dispositifs (53, 55), chaque dispositif du premier utilisateur étant sollicité par ledit même identifiant d'utilisateur disponible au public ; **caractérisé par** des moyens destinés à fournir un élément (65) lequel est différent de l'identifiant d'utilisateur disponible au public relatif au premier utilisateur, qui indique l'identité du dispositif du premier utilisateur et qu'il est possible de distinguer d'un élément qui indique un autre dispositif parmi les dispositifs du premier utilisateur ; des moyens destinés à stocker sur le dispositif (30) du deuxième utilisateur des informations concernant la capacité dans une mémoire de capacités (67) en conjonction avec l'élément (65) ; des moyens destinés à envoyer au dispositif (30) du deuxième utilisateur l'élément qui indique l'identité du dispositif (55) du premier utilisateur au moment de l'établissement d'une session de communication entre le dispositif (55) du premier utilisateur et le dispositif (30) du deuxième utilisateur ; des moyens associés au dispositif (30) du deuxième utilisateur, en réaction à l'élément reçu indiquant l'identité du dispositif (55) du premier utilisateur, étant opérables pour récupérer des informations de capacité relatives au dispositif (55) du premier utilisateur à partir de la mémoire de capacités (67), et en réaction de quoi le dispositif (30) du deuxième utilisateur se rend compte des capacités du dispositif (55) du premier utilisateur.

23. Système selon la revendication 22, étant opérable de façon à assurer l'exécution de toutes les étapes du procédé selon l'une quelconque des revendications 1 à 21.

24. Dispositif de télécommunications mobile (30) d'un utilisateur, apte à être enregistré auprès d'un réseau de télécommunications (33) auprès duquel une pluralité d'utilisateurs sont enregistrés et un identifiant d'utilisateur disponible au public (MSISDN) permet d'accéder à chaque utilisateur, le dispositif de télécommunications mobile (30) comprenant des moyens pour recevoir à partir du réseau (33) un message contenant des informations au sujet des capacités d'un dispositif (55) d'un autre utilisateur, cas dans lequel ledit autre utilisateur est un utilisateur d'une pluralité de dispositifs, chaque dispositif dudit autre utilisateur étant sollicité par ledit même identifiant d'utilisateur disponible au public ; **caractérisé par** des moyens destinés à stocker les informations concernant la capacité dans une mémoire de capacités (67) en conjonction avec un élément (65), lequel est différent de l'identifiant d'utilisateur disponible au public relatif audit autre utilisateur, qui indique l'identité du dispositif (55) dudit autre utilisateur et qu'il est possible de distinguer d'un élément qui indique un autre dispositif parmi les dispositifs (53) de l'autre utilisateur ; des moyens destinés à recevoir l'élément qui indique l'identité du dispositif (55) de l'autre utilisateur au moment de l'établissement d'une session de communication avec le dispositif (55) dudit autre utilisateur ; et des moyens, destinés à réagir à l'élément reçu indiquant l'identité du dispositif (55) de l'autre utilisateur, étant opérables pour récupérer les informations de capacité à partir de la mémoire de capacités (67), en réaction de quoi le dispositif de télécommunications mobile (30) se rend compte des capacités du dispositif (55) de l'autre utilisateur.

25. Dispositif selon la revendication 24, étant opérable de façon à assurer l'exécution de toutes les étapes du procédé effectuées par le dispositif du deuxième utilisateur indiquées dans le procédé selon l'une quelconque des revendications 1 à 21.
